# EUROPÄISCHE PATENTSCHRIFT

(11) **EP 1 204 845 B1**
(45) Veröffentlichungstag und Bekanntmachung des Hinweises auf die Patenterteilung: **27.04.2005**
(21) Anmeldenummer: 00949477.4
(22) Anmeldetag: 10.08.2000
(51) Int. Cl.: G01B 11/26, B21D 5/02

(54) **VERFAHREN UND VORRICHTUNG ZUM ERFASSEN EINES BIEGEWINKELS AN EINEM WERKSTÜCK**
METHOD AND DEVICE FOR DETECTING A BENDING ANGLE ON A WORKPIECE
PROCEDE ET DISPOSITIF POUR DETERMINER UN ANGLE DE CINTRAGE SUR UNE PIECE

(30) Priorität: 21.08.1999 DE 19939837
(43) Veröffentlichungstag der Anmeldung: 15.05.2002
(73) Patentinhaber: EHT Werkzeugmaschinen GmbH, 79331 Teningen (DE)
(72) Erfinder: WEIGOLD, Simon, D-79336 Broggingen (DE); FEHRENBACH, Thomas, D-79261 Gutach-Siegelau (DE)
(74) Vertreter: Patent- und Rechtsanwaltssozietät Maucher, Börjes & Kollegen
(86) Internationale Anmeldenummer: PCT/EP2000/007758
(87) Internationale Veröffentlichungsnummer: WO 2001/014826

(56) Entgegenhaltungen:
- EP-A- 0 470 263
- DE-A- 4 312 565
- US-A- 4 564 765
- PATENT ABSTRACTS OF JAPAN vol. 012, no. 231 (P-723), 30. Juni 1988 (1988-06-30) -& JP 63 021505 A (AMUTETSUKU:KK), 29. Januar 1988 (1988-01-29)

## Beschreibung

Die Erfindung betrifft ein Verfahren zum Erfassen eines Biegewinkels und/oder der Änderung des Biegewinkels an einem Werkstück während eines Biegevorganges, wobei ein Meßstrahl oder Lichtstrahl auf den oder die hinsichtlich der Winkelstellung zu vermessenden Werkstückschenkel gerichtet und so als Lichtebene oder Lichtkegel gestaltet wird, das auf dem Werkstück oder Werkstückschenkel eine Licht-Linie oder -Strecke oder insbesondere eine symetrische geometrische Form erzeugt wird, und wobei die winkelabhängige Lageänderung des Auftreffortes bei dem Biegeprozeß opto-elektronisch, zum Beispiel durch eine Kamera, insbesondere durch eine Array-Kamera aus deren Sicht erfaßt und aus den Lageänderungen des Auftreffortes aus der Sicht der Kamera die Winkellage des jeweiligen Werkstückschenkels berechnet wird.

Die Erfindung betrifft ferner eine Vorrichtung zur Ermittlung der Lage- oder Winkel-Änderung eines Werkstückes oder eine Werkstückschenkels beim Biegen, insbesondere des oder der Biegeschenkel mit wenigstens einer Meßstrahl- oder Lichtquelle und mit einem das von der Meßstrahl- oder Lichtquelle auf dem Werkstück erzeugte Lichtmuster aufnehmenden Empfänger, zum Beispiel mit einer Kamera, insbesondere mit einem Array-Kamera, sowie mit einem Rechner zur Berechnung der Winkeländerung aufgrund der Lageänderung des/der Lichtmuster wobei den Meßstrahl- oder Lichtquelle oder -quellen so angeordnet oder gestaltet sind, daß das von ihnen erzeugte Muster wenigstens eine gerade oder leicht gekrümmte Linie oder eine insbesondere symmetrische, geometrischen Form, Fläche oder Figur bildet.
Unter Werkstück oder Wertstückschenkel wird dabei ein solches verstanden, welches eine ein Muster des Meß-und Lichtstrahles aufnehmende Fläche aufweist, also beispielsweise eine Platte, ein Blech oder dergleichen.

Um bei Umformprozeßen die als "freies Biegen" bezeichnet werden, eine höhere Prozeßsicherheit und Genauigkeit zu erzielen, werden in zunehmenden Maße, Verfahren und Vorrichtungen zum Messen der Biegewinkel verlangt, die das Messen schon während des Biegens erlauben.

Aus DE 32 16 053 C2 ist wohl ein Verfahren als eine Vorrichtung der eingangs genannten Art bekannt, wobei ein oder zwei Lichtpunkte auf das Werkstück projiziert werden.

Bei der Verfahrensweise mit einem Lichtpunkt wird dieser mit einer in einem Winkel zur Lichtachse stehenden Zeilenkamera detektiert. Die Lageveränderung des Lichtpunktes ist dabei ein Maß für den Abstand des Meßobjektes, woraus auf eine Lageänderung eines gebogenes Teiles des Werkstückes geschlossen werden kann.

Werden zwei Lichtpunkte verwendet, wird der sich ändernde Abstand dieser Punkte über die Kamera ermittelt und der zugehörige Winkel in Kenntnis der geometrischen Bedingungen des Biegevorganges und der Anordnung der Lichtstrahlen errechnet.

Die Verwendung eines oder zweier Lichtpunkte führt bei verschiedenen Oberflächen von werkstücken zu unterschiedlichen Streuungen der Meßwerte. Außerdem können aufgrund der geringen Größe eines solchen Lichtpunktes örtliche Oberflächenstrukturen wie Rauhigkeiten, Erhebungen, Vertiefungen oder dergleichen zu einer Verfälschung der Meßwerte führen.

Zwar ist aus DE 32 16 053 C2 auch bekannt, einen kegeligen Lichtstrahl auf die Werkstückoberfläche zu projizieren, der sich dort als Kegelschnitt (Ellipse) darstellt. Veränderungen eines Durchmessers der Ellipse gegenüber der Ausgangslage erlauben dann die Berechnung des jeweiligen Biegewinkels. Auch dabei besteht jedoch die Gefahr von Ungenauigkeiten und Verfälschungen durch unterschiedliche Oberflächenstrukturen.

Aus DE 43 12 565 A1 oder aus EP 0 470 263 A1 sind Verfahren und Vorrichtungen bekannt, bei denen Licht-Linien auf die Schenkel eines zu biegenden Werkstückes projiziert werden, die quer zur Biegelinie und gleichzeitig schräg zu einer rechtwinklig durch die Biegelinie verlaufenden Ebene angeordnet sind. Die beim Biegen entstehenden Winkeländerungen können erfaßt und umgerechnet werden. Je nach Anordnung der Meßstrahl- oder Lichtquelle oder -quellen und der Kamera sowie der daraus resultierenden Lage des oder der Meßstrahl- oder Licht-Linien auf dem Werkstück ergeben sich beim Ändern der Lage eines Biegewinkels nur relativ kleine Winkeländerungen dieser Meßstrahl- oder Licht-Linien, so daß auch dadurch die Meßgenauigkeit zumindest in manchen Fällen hinter den Anforderungen zurückbleibt. Darüberhinaus kann die Installation der Meßstrahl- oder Lichtquelle und der Kamera wegen der Notwendigkeit der Erzeugung schräg verlaufender Licht-Linien aufwendig sein.

Es besteht daher die Aufgabe, ein Verfahren und eine Vorrichtung der eingangs genannten Art zu schaffen, womit der Vorteil erhalten bleibt, daß eine Meßstrahl- oder Lichtstrahlprojektion auf ein Werkstück bei dessen Lageveränderung zum Beispiel durch einen Biegevorgang aus Sicht der Kamera eine Ortsveränderung durchführt, wobei die Meßgenauigkeit erhöht und von Verunreinigungen oder Rauhigkeiten der Werkstückoberfläche weitestgehend unabhängig gemacht werden soll.

Zur Lösung dieser Aufgabe ist das eingangs genannte Verfahren dadurch gekennzeichnet, daß die Licht-Linie oder Strecke - beziehungsweise die Meßstrahl-Linie - oder eine Symmetrie-Linie der geometrischen Form parallel oder im wesentlich parallel zu der Biegelinie des Werkstückes auf den jeweiligen Werkzeugschenkel projiziert wird und das aus dem Maß der Parallelverchiebung dieser Linie oder Linien aus der Sicht der Kamera die Winkeländerung des Werkstückschenkels berechnet wird.

Dies ergibt eine sehr einfache Anordnung und auch Berechnung eines jeweiligen Winkels und insbesondere einer Winkeländerung, wobei aber Ungenauigkeiten durch Oberflächenbeschädigungen oder - rauhigkeiten am Werkstück durch die Verwendung einer Licht-Linie praktisch ausgeschlossen werden. Schon eine relativ geringfügige Winkeländerung führt zu einer entsprechend deutlichen Parallelverschiebung der entsprechend projizierten Linie auf dem Werkstück, die gut erfaßt und in die entsprechende Winkeländerung umgerechnet werden kann.

Dabei ist es besonders vorteilhaft, daß die Licht-Linie oder Meßstrahl-Linie - oder mehrere derartige Linien oder dergleichen - auf die Außenseite des jeweiligen Winkelschenkels projiziert werden können, so daß die Unterbringung der Licht- oder Meßstrahlquelle und der Kamera problemlos an die jeweiligen Verhältnisse angepaßt werden kann und die Winkeländerung durchführender Matrizenstempel problemlos zwischen die beiden Winkelschenkel eines zu biegenden Werkstückes eingreifen kann, ohne dabei die Meßstrahlen zu beeinträchtigen. Wenn die Platzverhältnisse es zulassen, kann jedoch die Meßstrahl- oder Licht-Linie auch auf die Innenseite des jeweiligen Winkelschenkels projiziert werden.

Zweckmäßig ist es, wenn eine gerade oder leicht gekrümmte Licht-Linie durch eine Lichtebene oder einen Lichtfächer oder als Begrenzungslinie einer durch einen Lichtkegel gebildeten geometrischen Form, beispielsweise eines Dreieckes, Viereckes oder Trapezes, oder als Symmetrie-Linie, ein Durchmesser eines Kreises oder einer Ellipse oder einer Mittellinie oder diagonale eine Vieleckes erzeugt wird. Die entsprechend zu detektierende Linie kann also auf unterschiedlichen Weisen erzeugt werden, und durch auch die jeweilige Oberflächenstruktur eines Werkstückes berücksichtigt werden kann.

Die Licht-Linie oder Symmetrie-Linie kann so auf den Werkstückschenkel projiziert werden, daß sie mit der oder den Reihen von Aufnahme-Pixeln der opto-elektronischen Erfassung, zum Beispiel in der aufnehmenden Kamera, zumindest bereichsweise einen spitzen Winkel von weniger als 45° bildet. Dadurch kann die Auflösung trotz einer begrenzten Anzahl von Pixeln in der jeweiligen Pixelreihe erheblich gesteigert werden. Gewöhnliche Kameras werden mit 512 bis 760 Pixeln je Zeile ausgeführt. Erst wenn die Licht-Linie ein Kamerapixel durchlaufen hat, kann ein neuer Meßwert ermittelt oder angegeben werden. Die maximale Auflösung ist also bei einer parallelen Anordnung der Licht-Linie und der Pixelreihen auf die Größe eines Pixel begrenzt.

Zwar kann eine höhere Auflösung rechnerisch durch Auswertung der Intensitätsverteilung innerhalb mehrerer benachbarter Pixel erreicht werden, was jedoch von der Lichtverteilung beeinflußt wird und die Genauigkeit um das Dreifache steigern kann.

Durch die vorerwähnte Ausgestaltung der Erfindung mit einer Winkelanordnung zwischen der Licht-Linie und der Pixelreihe wird erreicht, daß die Licht-Linie in dem entsprechenden Winkel zur Gitterstruktur der Kamera Array. Damit kann die zweidimensionale Eigenschaft der Kamera ausnutzt werden, um eine höhere Auslösung zu erreichen. Bei der parallel zur Gitterstruktur liegenden Lichtoder Meßstrahllinie wird ein nächster Meßwert nach einer Änderung der Linienlage um eine Pixelgröße gemessen. Bei der in einem spitzen Winkel zur Gitterstruktur liegenden Linie wird sich bereits ein Pixel ändern, wenn die Linie sich nur um weniger als eine Pixelgröße bewegt, weil dann nämlich der Schnittpunkt zwischen der Licht-Linie und der Pixelreihe entsprechend geändert wird. Umgekehrt ausgedrückt bedeutet dies, daß nach einer Parallelverschiebung der Licht-Linie um das Maß eines Pixels bei der erwähnten Winkellage einzeln und nacheinander so viele Pixel geändert wurden, wie es der Anzahl der durch die Schräglage betroffenen Zeilen entspricht, so daß eine entsprechend feinere Unterteilung der Meßschritte und damit eine höhere Auflösung erreicht wird.

Besonders zweckmäßig ist es dabei, wenn die Reihe der Aufnahme - Pixel oder die in gitterförmiger Anordnung vorgesehenen Reihen von Aufnahmen - Pixeln derart schräg zu der/den Meßstrahl-, Lichtoder Symmetrie-Linien angeordnet wird oder werden, daß die die Reihe oder Reihen von nebeneinander liegenden Pixeln gegenüber der Biegelinie und der Licht- oder Symmetrie-Linie unter spitzem Winkel schräg verlaufen oder daß die Reihe oder die Reihen der Pixeln parallel zur Biegelinie angeordnet und die Licht- oder Symmetrie-Linie unter einem kleinen spitzen Winkel schräg dazu auf den Werkzeugschenkel projiziert wird. In der Praxis kann dies auf einfache Weise dadurch geschehen, daß die Kamera mit ihren Pixelreihen gegenüber der Biegelinie um ihre optische Achse geringfügig verdreht wird.

Eine Verbesserung der Genauigikeit kann erzielt werden, wenn wenigstens zwei beanstandete Licht- Linien oder Begrenzungs- oder Symmetrie-Linien auf das Werkstück oder auf den Werkstück-Schenkel projiziert werden und wenn der sich durch eine Winkeländerung auf dem Werkstück ändernde Abstand dieser Linien gemessen und in die Winkeländerung umgerechnet wird. Dabei wird der Abstand der zwei Linien auf der Kamera ein direktes Maß für die Winkellage des Meßojektes. Außere Einflüsse auf den Abstand des Meßsystems zum Meßobjekt wie Vibrationen des Meßobjektes beziehungsweise Werkstückes beim Umformen in einer Biegemaschiene und andere Erschütterungen können dadurch aus dem Meßergebnis eliminiert werden. Gleichzeitig kann dabei der Vorteil der höheren Genauigkeit durch die schon erwähnte Winkel- oder Schräglage zwischen Licht-Linie oder dergleichen und den Pixel rein der Kamera zusätzlich nutzbar gemacht werden.

Der Winkel zwischen dem Verlauf der Licht-Linie oder den Licht-Linien oder Symmetrie-Linien oder dergleichen und der oder den Pixelreihen kann auf etwa 3 bis 10 Grad, vorzugsweise auf etwa 5 bis 6 Grad insbesondere auf 5, 7 Grad eingestellt werden. Dies ist ein spitzer Winkel, der gleichzeitig die übliche Größe von Pixelnbreiten optimal berücksichtigt. Wird zum Beispiel in 10 Zeilen eine Pixelbreite durchlaufen, kann eine gegenüber der pixelabmessung zehnfach feinere Genauigkeit erreicht werden und dies entspricht bei der erwähnten Anordnung der Schräglage von 5,7 Grad, was für die Praxis ausreicht. Eine noch größere Genauigkeit kann mit einem kleineren Winkel erreicht werden wodurch dann bei einer Verschiebung von um eine Pixelbreite noch mehr Zeilen durchlaufen würden.

Wie bereits erwähnt, kann zum Einstellen des Winkels der Pixel-Reihe oder Pixel-Reihen gegenüber der oder den projizierten Lichtoder Symetrielinien die Kamera um ihre optische Achse verdreht werden. Dies ermöglicht auch eine eventuelle Korrektur der jeweiligen Einstellung und unter Umständen eine Anpassung an unterschiedliche Anforderungen der Genauigkeit oder an unterschiedliche Werkstücke.

Die eingangs erwähnte Vorrichtung ist zur Lösung der Aufgabe dadurch gekennzeichnet, daß die Meßstrahl- oder Lichtquelle oder -quellen so angeordnet ist oder sind, daß die Licht-Linie oder Licht-Linien oder dergleichen, auch als Begrenzung von geradlinig begrenzten Lichtflecken, oder die Symmetrie-Linie der geometrischen Form so angeordnet ist oder sind, daß die parallel oder im wesentlichen parallel zur Biegelinie verlaufen. Somit ergibt sich bei einer Lageveränderung des Werkstückes oder des Werkstückschenkels insbesondere durch einen Biegevorgang aus der Sicht der Kamera eine Parallelverschiebung der entsprechenden projizierten Linie relativ zur ihrer vorhergehenden Lage und zur Biegelinie, so daß daraus die entsprechende Winkeländerung errechnet werden kann.

Besonders günstig ist es dabei, wenn zwei Netzstrahl- oder Lichtquellen vorgesehen und so angeordnet sind, daß die auf das Werkstück projizierten Linien, die geraden Begrenzungslinien eines Lichtfleckes oder die Symmetrie-Linien am Werkstück parallel zueinander sind. Aufgrund von Lageänderungen des Werkstückes oder eines Werkstückschenkels bewirkte Änderungen des Abstandes dieser Linien ergeben dann ein noch genaueres Maß der entsprechenden Lage- oder Winkeländerung.

Eine besonders zweckmäßige Ausgestaltung der erfindungsgemäßen Vorrichtung kann dabei darin bestehen, daß der opto-elektronische Empfänger, insbesondere die Kamera, um die optische Achse etwas verdreht angeordnet ist, so daß die Aufnahme-Pixel in einer oder mehreren schräg zu der oder den Licht-Begrenzungs-oder Symmetrie-Linien verlaufenden Reihen angeordnet sind. Dies stellt eine konstruktiv besonders einfache Lösung dar, um die Pixelreihen unter spitzem Winkel gegenüber einer durch einen Meß- oder Lichtstrahl erzeugten Linie beziehungsweise deren Abbildung in der Kamera anzuordnen.

Ein hinsichtlich der Genauigkeit praktisch nicht ins Gewicht fallende Anordnung kann auch darin bestehen, daß die Aufnahmepixel des Empfängers oder der Kamera in parallel oder nahezu parallel zur Biegelinie angeordneten Reihen liegen und die Meßstrahl- oder Lichtquelle oder - quellen so angeordnet sind, daß die projizierte Linie oder Licht- Linie oder Symmetrie-Linien auf dem Werkstück und ihrer Abbildung in dem Empfänger oder der Kamera geringfügig schräg unter einem kleinen spitzen Winkel von zum Beispiel 3 Grad bis 10 Grad, insbesondere 5 Grad bis 6 Grad, vorzugsweise 5,7 Grad gegenüber der Reihe der Aufnahmepixel und/oder der Biegelinie verlaufen.

Günstig ist es, wenn die Richtung der Lichtebene oder des Lichtkegels des von der Meßstrahl- oder Lichtquelle oder den Lichtquellen abgegebenen und auf das Werkstück projizierten Meßstrahles und die optische Achse der Kamera unter einem festen Winkel zueinander und mit einem festen Abstand zur Ausgangslage des zu biegenden Werkstückes oder Schenkels und/oder der Biegelinie angeordnet sind. Daraus resultieren gleichbleibende geometrische Verhältnisse, die die Berechnung des jeweiligen Biegewinkels bei Lageänderungen des Werkzeugschenkels erleichtern. Entsprechend schnell kann eine Umrechnung und eventuell auch eine Anzeige des Rechenergebnisses erfolgen. Möglich ist aber natürlich auch, beispielsweise die Kamera hinsichtlich Abstand und Winkellage verstellbar vorzusehen, um Anpassung an unterschiedliche Werkstücke oder Ausgangslagen zu ermöglichen.

Vor allem bei Kombinationen einzelner oder mehrerer der vorgeschriebenen Verfahrens- und Vorrichtungsmerkmale und Maßnahmen ergibt sich für die Bestimmung von Winkel- oder Lageänderungen an Werkstücken, insbesondere solchen, die gebogen werden, ein einfach zu handhabendes Meßsystem, welches wie herkömmliche Abstandssensoren nach dem Briangolationsprinzip arbeitet.Die Winkellage eines Meßobjektes kann durch festgelegte geometrische Bedingungen über den Abstand ermittelt werden, wobei das Meßgerät, nämlich die Kamera in einem bekannten Winkel und einem bekannten Abstand zum Meßobjekt positioniert wird. Die Veränderung des Abstandes ist dann ein direktes Maß für die Winkeländerung des Meßobjektes. Dabei können in sinnreicher Weise durch projizierte Linien durch Oberflächen Ungenauigkeiten verursachte Meßfehler eliminiert und darüber hinaus durch eine Schrägstellung der projizierten Linie relativ zu den Aufnahmepixel- Reihen die Meßgenauigkeit gesteigert werden.

Nachstehend ist ein Ausführungsbeispiel der Erfindung anhand der Zeichnung näher beschrieben. Es zeigt in schematisierter Darstellung:

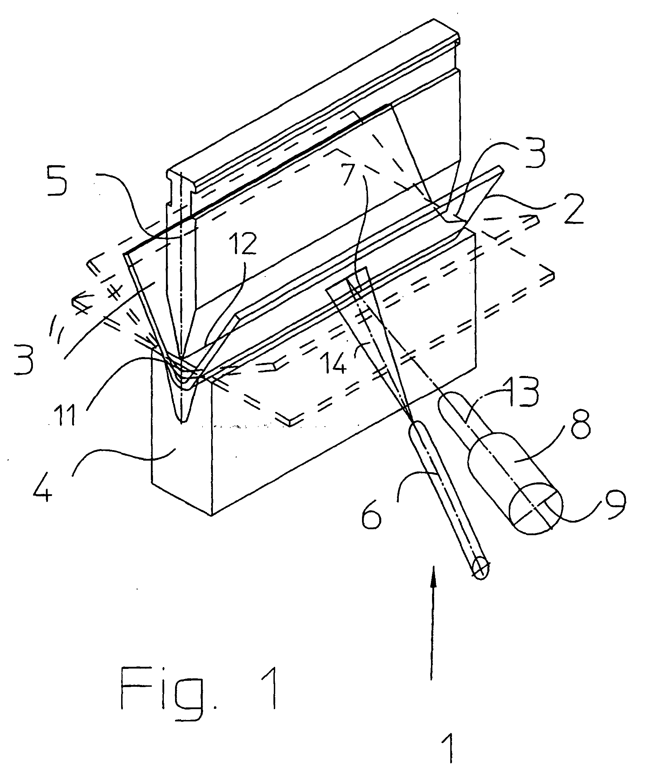

- Fig.1: in schaubildlicher Seitenansicht eine Vorrichtung zum Ermitteln oder erfassen der Lage oder der Winkelanordnung oder der Änderung eines Biegewinkels an einem Werkstück während eines Biegevorganges mit Hilfe einer eine Kerbe aufweisenden Matritze und einem Stempel zum Eindrücken des über der Kerbe und deren Kerbenrändern liegenden Werkstückes, mit einer Meßstrahl- oder Lichtstrahlquelle, die eine linienförmige Projektion auf einem Biegeschenkel erzeugt, und mit einer diese projizierte Meßstrahl- oder Licht-Linie detektierenden Kamera, die gegenüber der Meßstrahl- oder Lichtquelle um einen Winkel versetzt angeordnet ist,
- Fig.2: einen Querschnitt der Anordnung oder Vorrichtung gemäß Fig.1, wobei die Werkstückschenkel in unterschiedlichen Lagen und Biegefortschritten dargestellt sind,
- Fig.3: ein schematisiertes Feld mit parallelen Reihen von Pixeln der Aufnahmekamera und davon erfaßten Licht-Linien jeweils nach einem gewissen Biegefortschritt, wobei eine in unterschiedlichen Lagen dargestellte Licht-Linie parallel zu den Pixelreihen und die andere diesen gegenüber im Winkel dargestellt ist, sowie
- Fig.4: eine der Fig.3 entsprechende Darstellung, wobei jeweils zwei zueinander parallele Licht-Linien vorgesehen und detektiert sind und die Lageänderung des Werkstückschenkels aus Sicht der Kamera zu einer Änderung des Abstandes dieser beiden Linien führt.

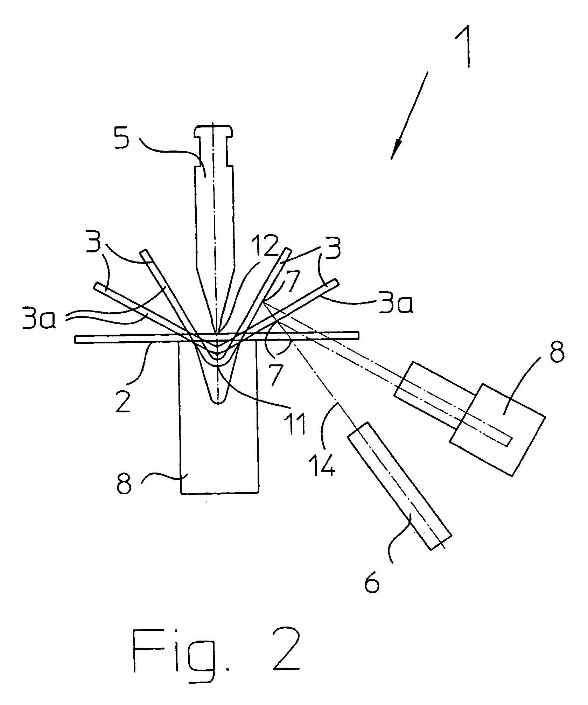

Eine in den Figuren 1 und 2 im ganzen mit 1 bezeichnete Vorrichtung dient zur Erfassung oder Ermittlung der Lage- oder Winkeländerung an einem Werkstück 2 oder an einem Werkstückschenkel 3 beim Biegen. Im Ausführungsbeispiel ist dabei ein freies Biegen des Werkstückes 2 mit Hilfe einer Matritze 4 und einem Stempel 5 vorgesehen, wie es beispielsweise aus DE 198 40 563 bekannt ist.

Zu der Vorrichtung 1 gehört ferner im Ausführungsbeispiel eine Meßstrahl- oder Lichtquelle 6, im folgenden auch nur noch "Lichtquelle 6" genannt, die auf dem durch den Biegevorgang in seiner Lage sich ändernden Werkstückschenkel 3 ein Lichtmuster erzeugt, welches im Ausführungsbeispiel als geradlinige Meßstrahloder Licht-Linie 7, im folgenden auch der Einfachheit halber nur "Licht-Linie 7" genannt, erzeugt.

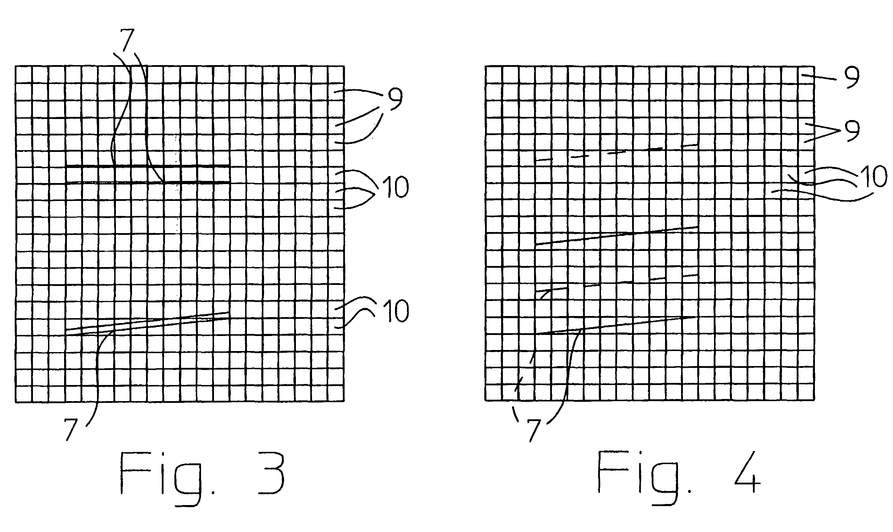

Ferner gehört zu der Vorrichtung 1 ein diese Licht-Linie 7 aufnehmender Empfänger, im Ausführungsbeispiel eine Kamera 8, die als Array-Kamera mit gemäß Fig.3 und 4 mehreren Reihen 9 von Pixeln 10 ausgestattet ist.

Statt einer einfachen Licht-Linie 7 - oder gemäß Fig.2 zwei parallelen Licht-Linien 7 - könnte die Licht-Linie 7 auch die Begrenzung eines Lichtfleckes oder eine Symmetrie-Linie einer projizierten geometrischen Form oder dergleichen sein. Für das Ausführungsbeispiel ist wichtig, daß diese Licht-Linie 7 parallel oder im wesentlichen parallel zu der Biegelinie 11 des Werkstückes 2, also der zwischen den beiden Werkstückschenkeln 3 verlaufenden Begrenzungslinie beziehungsweise der äußersten Stempelkante 12 verläuft. Dies erkennt man deutlich bei gleichzeitiger Betrachtung der Figuren 1 und 2.

Um zwei parallele Licht-Linien 7 gemäß Fig.4 auf einem Werkstückschenkel 3 zu erhalten, könnten auch zwei Meßstrahloder Lichtquellen 6 vorgesehen und so angeordnet sein, daß die projizierten Linien 7 am Werkstück 2 bzw. am Werkstückschenkel 3 parallel zueinander verlaufen.

Der im Ausführungsbeispiel als mit Pixeln 10 ausgestattete Kamera 8 ausgebildete opto-elektronische Empfänger ist um seine optische Achse 13 etwas verdreht angeordnet, so daß die Reihen 9 der Pixeln 10 gegenüber der Biegelinie 11, der Stempelkante 12 und vor allem der Licht-Linie 7 oder der beiden Licht-Linien 7 schräg und unter einem spitzen Winkel verlaufen.

Dies ist in den Figuren 3 und 4 dadurch angedeutet, daß die jeweils projizierten Licht-Linien 7, von der Darstellung im oberen Bereich der Fig.3 abgesehen, gegenüber den Pixel-Reihen 10, schräg verlaufen. In Wirklichkeit verlaufen diese Lichtr-Linien 7 horizontal, während die Pixel-Reihen 9 schräg angeordnet sind.

Anhand der Fig.3 wird deutlich, daß durch diese relative Schräglage der Pixelreihen 10 gegenüber der detektierten Licht-Linie 7 schon eine ganz geringfügige Verschiebung dieser Licht-Linie 7 durch eine entsprechende Lageänderung eines Biegeschenkels 3 zu einer Änderung der Beaufschlagung von Pixeln 10 führt und detektiert werden kann, während bei einer parallelen Anordnung der Licht-Linie 7 zu den Pixelreihen 10 eine Änderung erst dann detektiert werden kann, wenn die Verschiebung der Abmessung der Pixel 10 entspricht, die im Ausführungsbeispiel als Quadrate dargestellt sind.

Die erwähnte Schräglage erhöht also die Meßgenauigkeit ganz erheblich. Während bei Parallellage der Licht-Linie 7 zu den Pixelreihen 9 bei einer Länge der Licht-Linie, die über insgesamt zehn in einer Reihe 9 nebeneinanderliegende Pixel 10 reicht, ist bei der dargestellten Schräglage schon eine Verschiebung der Licht-Linie und ein Zehntel dieses Betrages eine Detektion an der Kamera 8 gegeben.

Gesteigert kann dies dadurch werden, daß die Licht-Linien 7, wenn mehrere derartige Licht-Linien 7 gemäß Fig. 4 parallel und schräg zu den Pixelreihen 9 angeordnet werden, auch noch ihren Abstand zueinander ändern. Dabei könnte man die beiden parallelen Licht-Linien 7 der Fig.4 auch als äußere Begrenzungen eines Lichtfleckes auffassen, der parallele Begrenzungen hat, so daß dieser Lichtfleck auch mit einer einzigen Lichtquelle 6 erzeugt werden könnte.

Es sei auch noch erwähnt, daß auch eine geringfügige Schrägstellung der Licht-Linie 7 gegenüber der Biegelinie 11 zu guten Meßergebnissen führen kann, solange die Licht-Linie 7 oder die Licht-Linien 7 noch im wesentlichen parallel zur Biegelinie 11 verlaufen. Dies gilt vor allem dann, wenn die Pixelreihen 9 gegenüber der oder den Licht-Linien 7 gemäß Fig.3 oder 4 etwas schräg angeordnet sind. Dabei könnten sowohl die pixelreihen 9 als auch die Licht-Linie 7 jeweils - einander entgegengesetzt - geringfügig gegenüber der Biegelinie 11 schräg verlaufen, oder die Pixelreihen 9 könnten unter Umständen sogar parallel zur Biegelinie 11 liegen und die Licht-Linie 7 könnte geringfügig, aber im wesentlichen ihrerseits auch parallel zu dieser Biegelinie 11 angeordnet sein.

Durch die Projektion und Detektion einer oder mehrerer Licht-Linien 7 können eventuelle Oberflächenungenauigkeiten oder Rauhigkeiten an dem Werkstückschenkel 3 bei seiner Lagebestimmung eliminiert werden. Entsprechend genau kann die Winkellage des Werkstückschenkels 3 aufgrund trigonometrischer Berechnungen ermittelt werden, da die Abstände und Winkellagen der Lichtquelle 6, der Kamera 8 und des Werkstückes 2 vorgegeben und bekannt sind.

In Fig.2 ist noch verdeutlicht, wie bei der Lageänderung eines Biegeschenkels 3 die von der Lichtquelle 6 projizierte und in Fig.2 nur als Punkt erscheinende Licht-Linie 7 aus Sicht der Kamera 8 ihre Lage ändert, was in der Kamera 8 von den Pixelreihen 9 detektiert und einem nicht näher dargestellten Rechner zugeleitet werden kann, so daß aus solchen Parallelverschiebungen der Licht-Linie oder Licht-Linien 7 auf dem Werkstückschenkel 3 aus Sicht der Kamera die Winkeländerung berechnet werden kann, wobei der Lichtprojektor bzw. die Lichtquelle 6 und der von ihr abgegebene Lichtstrahl oder Lichtfächer 14 seine Lage nicht ändert und dadurch bei sich ändernder Lage des Werkstückschenkels 3 auf jeweils andere Stellen dieses Werkstückschenkels 3 trifft.

Zum Erfassen oder Ermitteln der Lage- oder Winkeländerung oder eines Biegewinkels an einem Werkstück 2 und einem Werkstückschenkel 3 beim Biegen wird wenigstens ein von einer Meßstrahl- oder Lichtquelle 6 ausgehender Meß- oder Lichtstrahl, insbesondere in Form eines Lichtfächers 14, auf das Werkstück 2 gerichtet, damit dort ein entsprechendes Lichtmuster, insbesondere eine Licht-Linie 7 erzeugt wird. Diese kann mit Hilfe eines Empfängers, am besten mit einer Kamera 8 aufgenommen und detektiert werden, so daß eine Winkeländerung des Werkstückes 2 oder seines Werkstückschenkels 3 aufgrund einer Lageänderung des Lichtmusters berechnet werden kann. Dabei wird die Meßstrahloder Lichtquelle 6 so angeordnet, daß die Licht-Linie 7 oder mehrere derartige Licht-Linien 7, die aber auch Symmetrie- oder Durchmesserlinien von geometrischen Formen sein können, parallel oder im wesentlichen parallel zur Biegelinie 11 verlaufen, so daß eine Änderung der Lage des Biegeschenkels 3 zu einer parallelverschiebung dieser projizierten Linie 7 führt. Besonders zweckmäßig ist es dabei, wenn die Pixelreihen 9 der Kamera 8 gegenüber der von ihr aufgenommenen Licht-Linie 7 unter kleinem oder spitzem Winkel schräg verlaufen, was die Meßgenauigkeit erhöht.

Dabei ist es aus Platzgründen und zur Berücksichtigung des Stempels 5 besonders günstig, wenn der Meß- oder Lichtstrahl 14, wie in Fig.1 und 2 erkennbar, auf die dem Stempel 5 abgewandten Außenseite 3a des Winkelschenkels 3 projiziert wird. Selbstverständlich kann das für einen Werkstückschenkel 3 beschriebene Meßverfahren in gleicher Weise an beiden Schenkeln 3 durchgeführt werden.

## Patentansprüche

1. Verfahren zum Erfassen eines Biegewinkels und/oder der Änderung des Biegewinkels an einem Werkstück während eines Biegevorganges, wobei ein Meßstrahl oder Lichtstrahl auf den oder die hinsichtlich der Winkelstellung zu vermessenden Werkstückschenkel (3) gerichtet und so als Lichtebene oder Lichtkegel gestaltet wird, daß auf dem Werkstück oder Werkstückschenkel eine Licht-Linie (7) oder -Strecke oder insbesondere eine symmetrische geometrische Form erzeugt wird, und wobei die winkelabhängige Lageänderung des Auftreffortes bei dem Biegeprozeß opto-elektronisch, zum Beispiel durch eine Kamera (8), insbesondere durch eine Array-Kamera aus deren Sicht erfaßt und aus den Lageänderungen des Auftreffortes aus der Sicht der Kamera (8) die Winkellage des jeweiligen Werkstückschenkels (3) berechnet wird, **dadurch gekennzeichnet, daß** die Licht-Linie (7) oder -Strecke oder eine Symmetrie-Linie der geometrischen Form parallel oder im wesentlichen parallel zu der Biegelinie (11) des Werkstückes (2) auf den jeweiligen Werkstückschenkel (3) projiziert wird und daß aus dem Maß der Parallelverschiebung dieser Linie oder Linien aus der Sicht der Kamera (8) die Winkeländerung des Werkstückschenkels (3) berechnet wird.

2. Verfahren nach Anspruch 1, **dadurch gekennzeichnet, daß** eine gerade oder leicht gekrümmte Licht-Linie (7) durch eine Lichtebene oder einen Lichtfächer (14) oder als Begrenzungslinie einer durch einen Lichtkegel gebildeten geometrischen Form, beispielsweise eines Dreieckes, Viereckes oder Trapezes, oder als Symmetrie-Linie ein Durchmesser eines Kreises oder einer Ellipse oder eine Mittellinie oder Diagonale eines Vieleckes erzeugt wird.

3. Verfahren nach Anspruch 1 oder 2, **dadurch gekennzeichnet, daß** die Licht-Linie (7) oder Symmetrie-Linie so auf den Werkstückschenkel (3) projiziert wird, daß sie mit der oder den Reihen (9) von Aufnahme-Pixeln (10) der opto-elektronischen Erfassung, zum Beispiel in der aufnehmenden Kamera (8), zumindest bereichsweise einen spitzen Winkel von weniger als 45°, bildet.

4. Verfahren nach einem der Ansprüche 1 bis 3, **dadurch gekennzeichnet, daß** die Reihe (9) der Aufnahme-Pixel (10) oder die in gitterförmiger Anordnung vorgesehenen Reihen (9) von Aufnahme-Pixeln (10) derart schräg zu der/den Lichtoder Symmetrie-Linien (7) angeordnet wird oder werden, daß die die Reihe oder Reihen (9) von nebeneinanderliegenden Pixeln (10) gegenüber der Biegelinie (11) und der Lichtoder Symmetrie-Linie unter spitzem Winkel schräg verlaufen oder daß die Reihe oder die Reihen (9) der Pixel (10) parallel zur Biegelinie (11) angeordnet und die Licht- oder Symmetrie-Linie (7) unter einem kleinen spitzen Winkel schräg dazu auf den Werkstückschenkel (3) projiziert wird.

5. Verfahren nach einem der Ansprüche 1 bis 4, **dadurch gekennzeichnet, daß** wenigstens zwei beabstandete Licht-Linien (7) oder Begrenzungs- oder Symmetrie-Linien auf das Werkstück oder auf den Werkstückschenkel projiziert werden und daß der sich durch eine Winkeländerung auf dem Werkstück (2,3) ändernde Abstand dieser Linien gemessen und in die Winkeländerung umgerechnet wird.

6. Verfahren nach einem der Ansprüche 1 bis 5, **dadurch gekennzeichnet, daß** der Winkel zwischen dem Verlauf der Licht-Linie (7) oder Licht-Linien (7) oder Symmetrie-Linien und der oder den Pixel-Reihen (9) auf etwa 3° bis 10°, bevorzugt etwa 5° bis 6°, insbesondere auf 5,7°, eingestellt wird.

7. Verfahren nach einem der Ansprüche 1 bis 6, **dadurch gekennzeichnet, daß** zum Einstellen des Winkels der Pixel-Reihe (9) oder Pixel-Reihen (9) gegenüber der oder den Lichtoder Symmetrie-Linien (7) die Kamera (8) um ihre optische Achse (13) verdreht wird.

8. Verfahren nach einem der Ansprüche 1 bis 7, **dadurch gekennzeichnet, daß** der(die) Meß- oder Lichtstrahl(en) (14) auf die Außenseite (3a) des Winkelschenkels (3) projiziert wird(werden).

9. Vorrichtung (1) zur Ermittlung der Lage- oder Winkel-Änderung eines Werkstückes (2) oder eines Werkstückschenkels (3) beim Biegen, insbesondere des oder der Biegeschenkel, mit wenigstens einer Meßstrahl- oder Lichtquelle (6) und mit einem das von der Meßstrahl- oder Lichtquelle (6) auf dem Werkstück (2) erzeugte Lichtmuster aufnehmenden Empfänger, zum Beispiel mit einer Kamera (8), insbesondere mit einer Array-Kamera, sowie mit einem Rechner zur Berechnung der Winkeländerung aufgrund der Lageänderung des/der Lichtmuster, wobei die Meßstrahl- oder Lichtquelle oder -quellen (6) so angeordnet oder gestaltet sind, daß das von ihnen erzeugte Muster wenigstens eine gerade oder leicht gekrümmte Linie oder eine insbesondere symmetrische geometrische Form, Fläche oder Figur bildet, insbesondere zur Durchführung des Verfahrens nach einem oder mehreren der vorstehenden Ansprüche, **dadurch gekennzeichnet, daß** die Meßstrahl- oder Lichtquelle (6) oder -quellen (6) so angeordnet ist oder sind, daß die Licht-Linie (7) oder Licht-Linien oder dergleichen, auch als Begrenzung von geradlinig begrenzten Lichtflecken, oder die Symmetrie-Linie der geometrischen Form so angeordnet ist oder sind, daß sie parallel oder im wesentlichen parallel zur Biegelinie (11) verlaufen.

10. Vorrichtung nach Anspruch 9, **dadurch gekennzeichnet, daß** zwei Meßstrahl- oder Lichtquellen (6) vorgesehen und so angeordnet sind, daß die projizierten Linien (7), die geraden Begrenzungslinien eines Lichtfleckes oder die Symmetrie-Linien am Werkstück (2) parallel zueinander sind.

11. Vorrichtung nach Anspruch 9 oder 10, **dadurch gekennzeichnet, daß** der opto-elektronische Empfänger, insbesondere die Kamera (8) um die optische Achse (13) etwas verdreht angeordnet ist, so daß die Aufnahme-Pixel (10) in einer oder mehreren schräg zu der oder den Licht-, Begrenzungs- oder Symmetrie-Linien (7) verlaufenden Reihen (10) angeordnet sind.

12. vorrichtung nach Anspruch 9 oder 10, **dadurch gekennzeichnet, daß** die Aufnahmepixel (10) des Empfängers oder der Kamera (8) in parallel oder nahe parallel zur Biegelinie (11) angeordneten Reihen liegen und die Meßstrahl- oder Lichtquelle (6) oder -quellen so angeordnet sind, daß die projizierte Linie (7) oder Licht-Linien (7) oder Symmetrie-Linien auf dem Werkstück (2,3,3a) geringfügig schräg unter einem kleinen spitzen Winkel von zum Beispiel 3° bis 10°, insbesondere 5° bis 6°, vorzugsweise 5,7°, verlaufen.

13. Vorrichtung nach einem der Ansprüche 9 bis 12, **dadurch gekennzeichnet, daß** die Richtung der Lichtebene oder des Lichtkegels des von der Meßstrahl- oder Lichtquelle (6) oder den Lichtquellen (6) abgegebenen und auf das Werkstück (2,3,3a) projizierten Meßstrahles und die optische Achse (13) der Kamera (8) unter einem festen Winkel zueinander und mit einem festen Abstand zur Ausgangslage des zu biegenden Werkstückes (2) oder Schenkels (3) und/oder der Biege-Linie (11) angeordnet sind.

## Claims

1. Process for detecting a bending angle and/or the change in the bending angle on a workpiece during a bending operation, in which a measuring beam or light beam is directed on to the workpiece side (3) whose angular position is to be measured, and is constructed as a light plane or light cone such that a line or path of light (7) or, in particular, a symmetrical geometric shape is produced on the workpiece or workpiece side, and the angle-dependent change in the position of the point of contact during the bending process is detected opto-electronically, for example by means of a camera (8), particularly by an array camera, from the viewpoint thereof, and the angular position of the workpiece side (3) in question is calculated from the changes in position of the point of contact viewed from the camera (8), **characterised in that** the line or path of light (7) or a line of symmetry of the geometric shape is projected parallel or substantially parallel to the bending line (11) of the workpiece (2) onto the workpiece side (3) in question and **in that** the change in the angle of the workpiece side (3) is calculated from the extent of parallel displacement of this line or lines viewed from the camera (8).

2. Process according to claim 1, **characterised in that** a straight or slightly curved line of light (7) is produced by a light plane or a light fan (14) or as the boundary line of a geometric shape formed by a light cone, for example a triangle, rectangle or trapezium, or as a line of symmetry, a diameter of a circle or an ellipse or a centre line or diagonal of a polygon.

3. Process according to claim 1 or 2, **characterised in that** the line of light (7) or line of symmetry is projected onto the workpiece side (3) such that at least in certain areas it forms an acute angle of less than 45° with the row or rows (9) of photographic pixels (10) of the optoelectronic detecting means, for example in the camera (8) taking the shot.

4. Process according to one of claims 1 to 3, **characterised in that** the row (9) of photographic pixels (10) or the rows (9) of photographic pixels (10) provided in a grid-like arrangement is or are arranged diagonally with respect to the line or lines of light or symmetry (7) such that the row or rows of adjacent pixels (10) extend diagonally at an acute angle relative to the bending line (11) and the line of light or symmetry, or that the row or rows (9) of pixels (10) are arranged parallel to the bending line (11) and the line of light or symmetry (7) is projected onto the workpiece side (3) diagonally thereto at a small acute angle.

5. Process according to one of claims 1 to 4, **characterised in that** at least two spaced-apart lines of light (7) or boundary lines or lines of symmetry are projected onto the workpiece or onto the workpiece side and the spacing between these lines which varies as a result of a change in angle on the workpiece (2, 3) is measured and converted into the change of angle.

6. Process according to one of claims 1 to 5, **characterised in that** the angle between the path of the line of light (7) or lines of light (7) or lines of symmetry and the row or rows of pixels (9) is set to about 3° to 10°, preferably about 5° to 6°, particularly 5.7°.

7. Process according to one of claims 1 to 6, **characterised in that** in order to set the angle of the row of pixels (9) or rows of pixels (9) relative to the line or lines of light or symmetry (7) the camera (8) is rotated about its optical axis (13).

8. Process according to one of claims 1 to 7, **characterised in that** the measuring or light beam(s) (14) is (are) projected onto the outside (3a) of the angle side (3).

9. Apparatus (1) for determining the change in position or angle of a workpiece (2) or a workpiece side (3) during bending, particularly the bending side, with at least one measuring beam or light source (6) and with a receiver which records the light pattern produced on the workpiece (2) by the measuring beam or light source (6), for example with a camera (8), particularly an array camera, and with a computer for calculating the change in angle as a result of the change in position of the light pattern or patterns, the measuring beam or light source or sources (6) being arranged or configured such that the pattern produced thereby forms at least one straight or slightly curved line or an, in particular, symmetrical geometric shape, surface or figure, particularly for carrying out the process according to one or more of the preceding claims, **characterised in that** the measuring beam or light source (6) or sources (6) is or are arranged such that the line of light (7) or lines of light or the like, also as the boundary of spots of lights with a linear boundary, or the line of symmetry of the geometric shape is or are arranged so as to extend parallel or substantially parallel to the bending line (11).

10. Apparatus according to claim 9, **characterised in that** two measuring beam or light sources (6) are provided and are arranged such that the projected lines (7), the straight boundary lines of a spot of light or the lines of symmetry on the workpiece (2) are parallel to one another.

11. Apparatus according to claim 9 or 10, **characterised in that** the optoelectronic receiver, particularly the camera (8), is arranged somewhat rotated about the optical axis (13) so that the photographic pixels (10) are arranged in one or more rows (10) extending diagonally to the line or lines of light, boundary lines or lines of symmetry (7).

12. Apparatus according to claim 9 or 10, **characterised in that** the photographic pixels (10) of the receiver or camera (8) are disposed in rows arranged parallel or nearly parallel to the bending line (11) and the measuring beam or light source (6) or sources are arranged so that the projected line (7) or lines of light (7) or lines of symmetry on the workpiece (2, 3, 3a) extend slightly diagonally at a small acute angle of for example 3° to 10°, particularly 5° to 6°, preferably 5.7°.

13. Apparatus according to one of claims 9 to 12, **characterised in that** the direction of the light plane or light cone of the measuring beam emitted by the measuring beam or light source (6) or sources (6) and projected onto the workpiece (2, 3, 3a) and the optical axis (13) of the camera (8) are arranged at a fixed angle to one another and at a fixed spacing from the starting position of the workpiece (2) or side (3) which is to be bent and/or of the bending line.

## Revendications

1. Procédé pour déterminer un angle de cintrage et/ou la modification de l'angle de cintrage au niveau d'une pièce pendant une opération de pliage; un faisceau de travail ou un rayon lumineux étant dirigé sur le ou les côtés de la pièce (3) à mesurer pour ce qui est de la position de l'angle, et étant formé comme une surface de lumière ou un cône de lumière, de sorte que sur la pièce ou sur le côté de la pièce, une ligne de lumière (7) ou un passage ou plus particulièrement une forme géométrique symétrique est générée, et dans lequel la modification de la position du point d'impact, dépendante de l'angle, est saisie, lors du processus de pliage, de manière optoélectronique, par exemple par une caméra (8), plus particulièrement par une caméra matricielle à partir de cette dernière et, à partir des modifications de position du point d'impact vues de la caméra (8), la position angulaire du côté de la pièce correspondante (3) est calculée, **caractérisé en ce que** la ligne de lumière (7) ou le passage de lumière ou une ligne de symétrie de la forme géométrique est projetée parallèlement ou essentiellement parallèlement à la ligne de pliage (11) de la pièce (2) sur le côté de la pièce (3) correspondant et **en ce que** la modification de l'angle du côté de la pièce (3) est calculée à partir de la mesure de la translation parallèle de cette ligne ou de ces lignes vues de la caméra (8).

2. Procédé selon la revendication 1, **caractérisé en ce qu'**une ligne de lumière (7) droite ou légèrement courbée est générée par une surface de lumière ou un éventail lumineux (14) ou comme ligne de délimitation d'une forme géométrique formée par un cône de lumière, par exemple un triangle, un rectangle ou un trapèze, ou comme ligne de symétrie, un diamètre d'un cercle ou d'une ellipse ou une médiane ou une diagonale d'un polygone.

3. Procédé selon la revendication 1 ou 2, **caractérisé en ce que** la ligne de lumière (7) ou la ligne de symétrie est projetée sur le côté de la pièce (3), de sorte qu'elle forme, avec la ou les rangées (9) de pixels de réception (10) de la saisie optoélectronique, par exemple dans la caméra (8) réceptrice, au moins par zones, un angle aigu inférieur à 45°.

4. Procédé selon l'une quelconque des revendications 1 à 3, **caractérisé en ce que** la rangée (9) de pixels de réception (10) ou les rangées de pixels de réception (10) prévues selon une disposition en treillis (9) est ou sont disposées de manière inclinée par rapport à la ligne de lumière ou aux lignes de symétrie (7), de sorte que la ou les rangées (9) de pixels (10) situées les unes à côté des autres s'étendent selon un angle aigu incliné par rapport à la ligne de pliage (11) ou à la ligne de lumière ou la ligne de symétrie ou de sorte que la ou les rangées (9) de pixels (10) sont disposées de façon parallèle à la ligne de pliage (11) et de sorte que la ligne de lumière ou la ligne de symétrie (7) est projetée sous un faible angle aigu de manière inclinée sur le côté de la pièce (3).

5. Procédé selon l'une quelconque des revendications 1 à 4, **caractérisé en ce qu'**au moins deux lignes de lumière (7) espacées ou lignes de délimitation ou .. lignes de symétrie sont projetées sur la pièce ou sur le côté de la pièce et **en ce que** l'écart de ces lignes modifié par une modification de l'angle sur la pièce (2, 3) est mesuré et converti en modification de l'angle.

6. Procédé selon l'une quelconque des revendications 1 à 5, **caractérisé en ce que** l'angle entre le parcours de la ligne de lumière (7) ou des lignes de lumière (7) ou des lignes de symétrie et la ou les rangées de pixels (9) est compris entre environ 3° et 10°, de préférence entre 5° et 6°, plus particulièrement 5,7°.

7. Procédé selon l'une quelconque des revendications 1 à 6, **caractérisé en ce que**, pour définir l'angle de la rangée de pixels (9) ou des rangées de pixels (9) par rapport à la ou aux lignes de lumière ou lignes de symétrie (7), la caméra (8) est mise en rotation autour de son axe (13) optique.

8. Procédé selon l'une quelconque des revendications 1 à 7, **caractérisé en ce que** le (les) rayon(s) lumineux ou faisceau(x) de travail (14) est (sont) projeté(s) sur le côté extérieur (3a) du côté de l'angle (3).

9. Dispositif (1) pour déterminer la modification de la position ou de l'angle d'une pièce (2) ou du côté d'une pièce (3) lors d'un pliage ou cintrage, plus particulièrement du ou des côtés de pliage, avec au moins une source de faisceau de travail ou une source de lumière (6) et un récepteur recevant un échantillon de lumière généré par la source de faisceau de travail ou la source de lumière (6) sur la pièce (2), par exemple une caméra (8), plus particulièrement une caméra matricielle, ainsi qu'avec un ordinateur pour calculer la modification de l'angle en fonction de la modification de la position du/des échantillons de lumière, dans lequel la ou les source(s) de faisceau de travail ou de lumière (6) sont disposées ou formées de sorte que l'échantillon qu'elles génèrent forme au moins une ligne droite ou légèrement courbée ou une forme géométrique plus pàrticulièrement symétrique, une surface ou une figure, plus particulièrement pour exécuter le procédé selon l'une ou plusieurs des revendications précédentes, **caractérisé en ce que** la ou les source(s) de faisceau de travail ou de lumière (6) est ou sont disposées de sorte que la ligne de lumière (7) ou les lignes de lumière ou équivalent est ou sont disposées également comme délimitation de spots lumineux délimités de manière linéaire, ou la ligne de symétrie de la forme géométrique, de sorte qu'elles s'étendent parallèlement ou essentiellement parallèlement à la ligne de pliage (11).

10. Dispositif selon la revendication 9, **caractérisé en ce que** deux sources de faisceau de travail ou de lumière (6) sont prévues et disposées de sorte que les lignes projetées (7), les lignes de délimitation droites d'un spot lumineux ou les lignes de symétrie sont parallèles les unes par rapport aux autres au niveau de la pièce (2).

11. Dispositif selon la revendication 9 ou 10, **caractérisé en ce que** le récepteur optoélectronique, en particulier la caméra (8) est disposé légèrement décalé en rotation autour de l'axe optique (13), de sorte que les pixels de réception (10) sont disposés dans une ou plusieurs rangées (10) s'étendant de manière inclinée par rapport à la ou aux lignes de lumière, de délimitation ou de symétrie (7).

12. Dispositif selon la revendication 9 ou 10, **caractérisé en ce que** les pixels de réception (10) du récepteur ou de la caméra (8) se trouvent dans des rangées disposées parallèlement ou sensiblement parallèlement à la ligne de pliage (11) et **en ce que** la ou les sources de faisceau de travail ou de lumière (6) sont disposées de sorte que la ligne projetée (7) ou les lignes de lumière (7) ou les lignes de symétrie sont légèrement inclinées sur la pièce (2, 3, 3a) sous un faible angle aigu de, par exemple, 3° à 10°, plus particulièrement de 5° à 6°, de préférence 5°,7°.

13. Dispositif selon l'une quelconque des revendications 9 à 12, **caractérisé en ce que** la direction de la surface de lumière ou du cône de lumière du faisceau de travail émis par la source de faisceau de travail ou la source de lumière (6) ou les sources de lumières (6) et projeté sur la pièce (2, 3, 3a) et l'axe optique (13) de la caméra (8) sont disposés l'un par rapport à l'autre sous un angle fixe et avec un écart déterminé par rapport à la position de repos de la pièce (2) ou du côté (3) à plier et/ou de la ligne de pliage (11).
